# NEUE EUROPÄISCHE PATENTSCHRIFT

(11) **EP 1 307 726 B2**
(45) Veröffentlichungstag und Bekanntmachung des Hinweises auf die Entscheidung über den Einspruch: **25.06.2014**
(45) Hinweis auf die Patenterteilung: 12.03.2008
(21) Anmeldenummer: 01974113.1
(22) Anmeldetag: 04.08.2001
(51) Int. Cl.: G01J 3/02, B82Y 20/00, B82Y 35/00, G01J 3/10, G01J 3/18, G01J 3/28, G01J 3/42, G01Q 60/22, G01N 21/64, G02B 21/00, G02B 21/16

(54) **VERFAHREN ZUR ERFASSUNG DES WELLENLÄNGENABHÄNGIGEN VERHALTENS EINER BELEUCHTETEN PROBE**
METHOD FOR DETECTING THE WAVELENGTH-DEPENDENT BEHAVIOR OF AN ILLUMINATED SPECIMEN
PROCÉDÉ POUR DÉTERMINER LE COMPORTEMENT, LIÉ À LA LONGUEUR D'ONDE, D'UN ÉCHANTILLON ÉCLAIRÉ

(30) Priorität: 08.08.2000 DE 10038526
(43) Veröffentlichungstag der Anmeldung: 07.05.2003
(73) Patentinhaber: Carl Zeiss Microscopy GmbH, 07745 Jena (DE)
(72) Erfinder: WOLLESCHENSKY, Ralf, 07743 Jena (DE); MÖHLER, Gunter, 07745 Jena (DE)
(74) Vertreter: Hampe, Holger
(86) Internationale Anmeldenummer: PCT/EP2001/009048
(87) Internationale Veröffentlichungsnummer: WO 2002/012863

(56) Entgegenhaltungen:
- EP-A- 0 647 838
- DE-A- 19 801 139
- DE-A- 19 829 944
- DE-A1- 19 829 981
- DE-A1- 19 835 072
- DE-C- 4 111 903
- US-A- 4 669 880
- US-A- 5 192 980
- US-A- 6 038 023

## Beschreibung

Die Erfindung bezieht sich auf ein Verfahren in der Fluoreszenzmikroskopie, insbesondere der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierenden Verfahren zum Screenen von Wirkstoffen (High Throughput Sceening). Durch den Übergang von dar Detektion von wenigen breiten spektralen Farbstoffbändern zur simultanen Aufnahme kompletter Spektren eröffnen sich neue Möglichkeiten bei der Identifikation, Separation und Zuordnung der meist analytischen oder funktionalen Probeneigenschaften zu räumlichen Teilstrukturen oder dynamischen Prozessen. Simultan-Untersuchungen von Proben mit Mehrfachfluorophoren werden damit bei überlappenden Fluoreszenzspektren auch in räumlichen Strukturen von dicken Proben möglich. Die Datenaufnahmerate wird durch die Anordnung nicht verringert.

### Stand der Technik

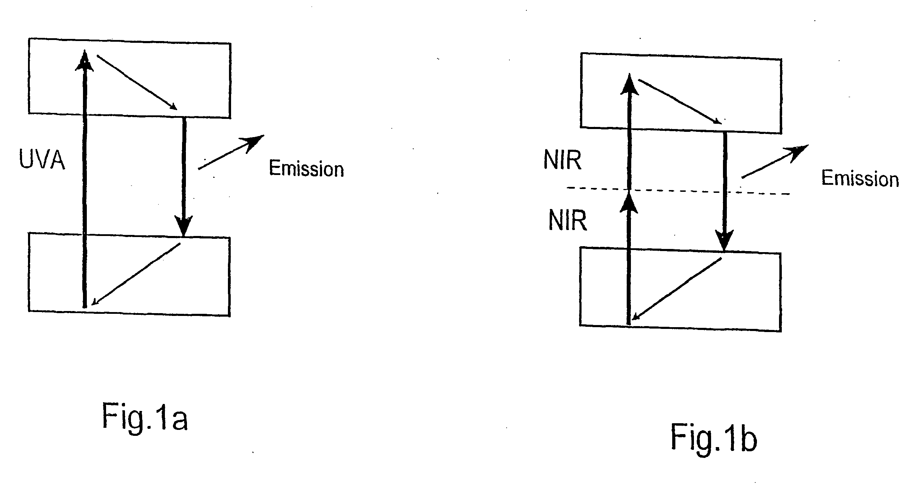

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltem von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hochenergetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und. Weise wie bei der Einphotonen-Absorption.

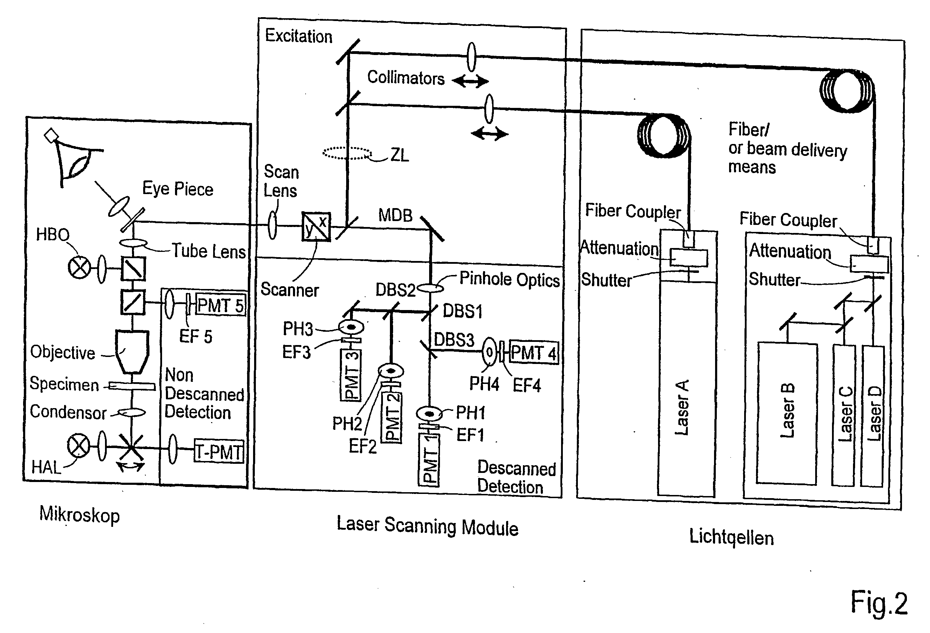

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei
verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto optischen Kristalls. Anschließend gelangt die Laserstrahlung über eine Faser oder eine geeignete Spiegelanordnung in das Scanmodul. Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detection) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende-befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

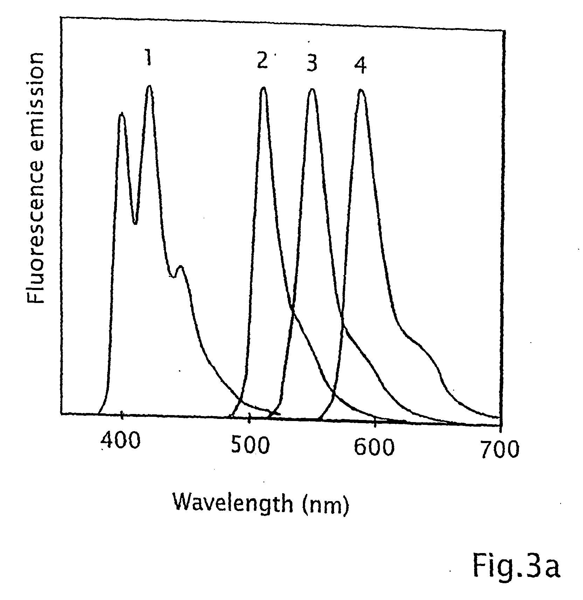

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit dem Stand der Technik entweder aufgrund verschiedener Absorptionseigenschaften oder Emissionseigenschaften (Spektren) getrennt nachgewiesen werden (Abb 3a). Abb.3a zeigt die Emissionsspektren von verschiedenen typischen Farbstoffen. Aufgetragen ist das Emissionssignal in Abhängigkeit von der Wellenlänge. Zu erkennen ist, daß sich die mit 1 bis 4 bezeichneten Farbstoffe in der Lage und Form ihrer Emissionsspektren unterscheiden.
Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT x). Eine flexible Anpassung der Detektion und der Anregung an entsprechende neue Farbstoffeigenschaften durch den Anwender ist mit der oben beschriebenen Anordnung nicht möglich. Statt dessen müssen für jeden (neuen) Farbstoff neue dichroitische Strahlteiler und Blockfilter kreiert werden.
In einer Anordnung gemäß WO95/07447 wird das Fluoreszenzlicht mit Hilfe eines Prismas spektral aufgespalten. Das Verfahren unterscheidet sich von der oben beschriebenen Anordnung mit dichroitischen Filtern nur dadurch, dass der verwendete Filter in seiner Charakteristik einstellbar ist. Es werden jedoch weiterhin pro Punktdetektor vorzugsweise das Emissionsband eines Farbstoffs aufgezeichnet.

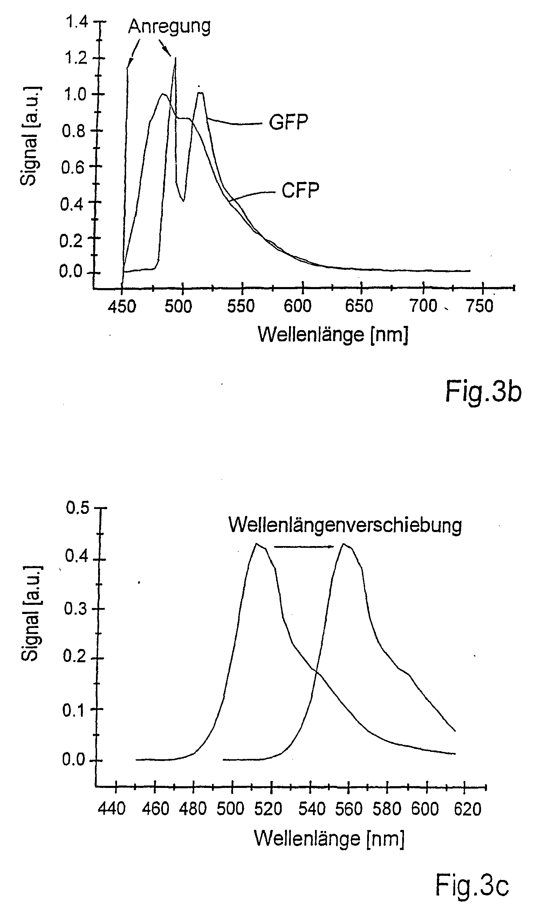

Ein schneller Wechsel der Detektionsbereiche ist mit beiden Anordnungen nur bedingt möglich, da die Einstellung des Emissionsbereiches auf mechanischen Bewegungen des dichroitischen Filters bzw. von Blenden beruht. Ein schneller Wechsel wird z.B. dann benötigt wenn sich die Emissionsspektren wie in Abb. 3b dargestellt überlagern jedoch die Absorptionseigenschaften verschieden sind. Abb.3b zeigt die Emissionssignale in Abhängigkeit von der Wellenlänge für die Farbstoffe CFP, Topas, CFT und Cyan-FP. Dieses Verfahren (Multitracking) ist in DE 19829981A1 beschrieben. Diese. Farbstoffe sind zur Untersuchung von Lebendpräparaten besonders geeignet da sie keine toxischen Wirkungen auf die zu untersuchenden Proben ausüben. Um beide Farbstoffe CFP,CFT möglichst effizient detektieren zu können wird in einer Scanrichtung CFP mit einer Wellenlänge von 458nm angeregt und die Fluoreszenz von 460-550 nm detektiert. Auf dem Rückweg des Scanners erfolgt die selektive Anregung von GFP mit 488nm und eine Detektion des Wellenlängenbereiches von 490 - 650 nm.

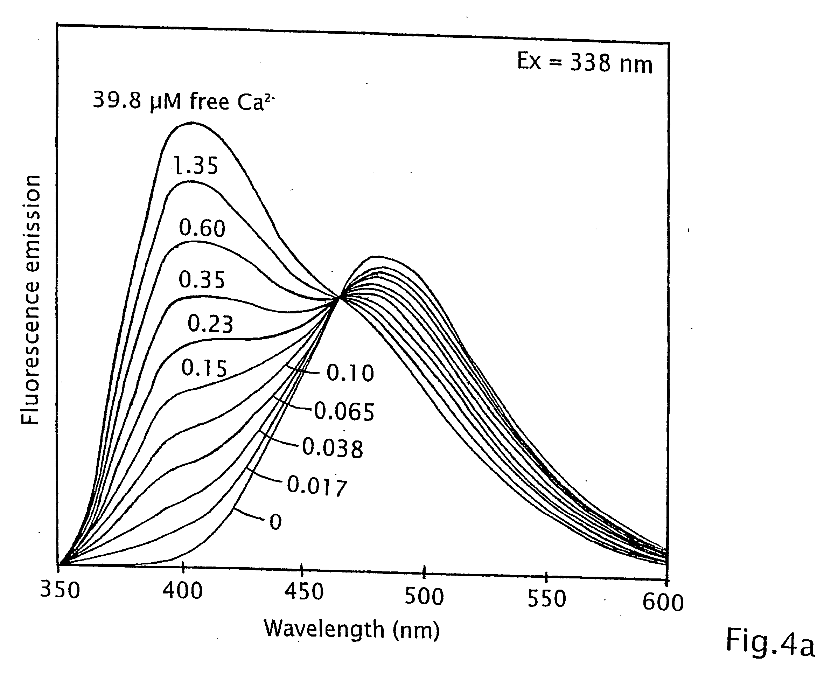

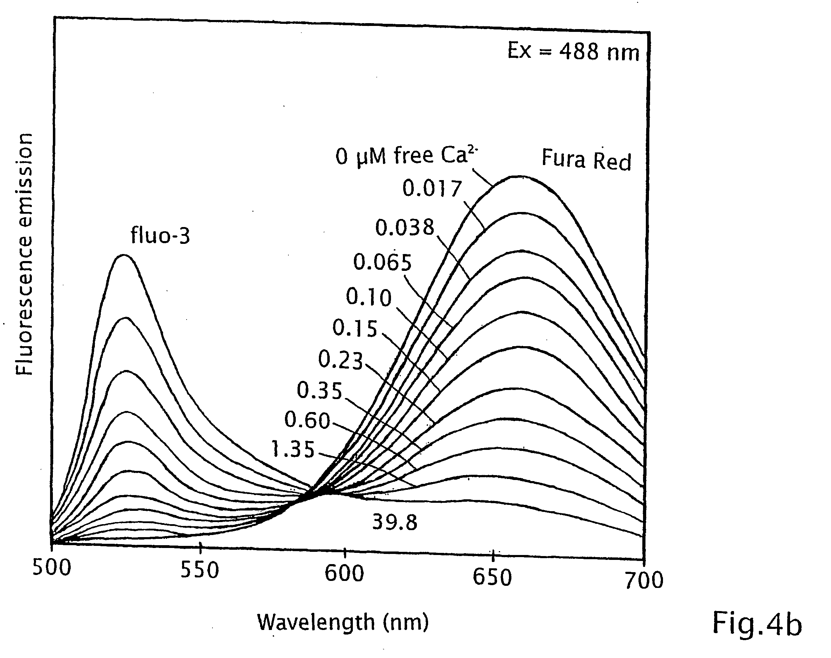

Ist die Lage des Emissionsspektrums der verwendeten Farbstoffe unbekannt oder tritt eine von der Umgebung abhängige Verschiebung des Emissionsspektrums (Abb. 3c) auf so ist eine effiziente Detektion der Farbstofffluoreszenzen nur bedingt möglich. In Abb.3c ist wiederum das Emissionssignal in Abhängigkeit von der Wellenlänge dargestellt. Die Wellenlängenverschiebung kann bis zu mehreren 10 nm betragen. Zur Vermessung des Emissionsspektrums in der Probe werden heutzutage Spektrometer auch in Verbindung mit einem LSM eingesetzt. Hierbei wird statt eines Punktdetektors ein herkömmliches meist hochauflösendes Spektrometer verwendet (Patent Dixon, et al. US 5,192,980). Diese können jedoch nur punktuell oder gemittelt über ein Gebiet ein Emissionsspektrum aufzeichnen. Es handelt sich also um eine Art der Spektroskopie.
In einer weiteren Applikation der Fluoreszenzmikroskopie wird die Ionenkonzentration (z.B.: Ca⁺, K⁺, Mg²⁺, ZN⁺,...) insbesondere in biologischen Präparaten bestimmt. Hierzu werden spezielle Farbstoffe oder Farbstoffkombinationen (z.B. Fura, Indo, Fluo; Molecular Probes, Inc.) verwendet, die eine spektrale Verschiebung in Abhängigkeit von der Ionenkonzentration besitzen. Abb. 4a) zeigt die Emissionsspektren von Indo-1 in Abhängigkeit von der Konzentration der Kalziumionen. Abb. 4b) zeigt ein Beispiel für die Emissionsspektren in Abhängigkeit von der Kalzium Ionenkonzentration bei Verwendung der Kombination von FLuo-3 und Fura Red-Farbstoffen. Diese speziellen Farbstoffe werden als Emissionsratiofarbstoffe bezeichnet. Summiert man die beiden in Abb. 4a dargestellten Fluoreszenzbereiche und bildet das Verhältnis (Ratio) beider Intensitäten, so kann auf die entsprechende Ionenkonzentration rückgeschlossen werden. Meist werden bei diesen Messungen dynamische Änderung der Ionenkonzentration in Lebendpräparaten untersucht, die eine Zeitauflösung von weniger als einer Millisekunde erfordern.
In DE 19801139 A ist eine miksokopische Anordnung mit spektraler Aufspaltung von Probenlicht beschrieben worden.
EP-A-647838 beschreibt ein Spektrophotometer mit einem CCD Array zur Auswertung des aufgespaltenen Lichtes.
In US 4669880 A wird eine Anordnung zur Konvertierung der Auflösung eines Spektrophotometers beschrieben.

Aufgabe der Erfindung sind neue Methoden zur flexiblen Detektion.
Diese Methoden sollen in bildgebenden wie in analytischen Mikroskopiersystemen eingesetzt werden können. Die Mikroskopsysteme sind bildgebende Systeme wie Laser-Scanning-Mikroskope zur dreidimensionalen Untersuchung von Präparaten.

Die o.g. Aufgabe wird durch ein Verfahren gemäß dem unabhängigen Patentanspruch 1gelöst. Bevorzugte Weiterbildungen sind Gegenstand der abhängigen Ansprüche.

### Beschreibung der Erfindung

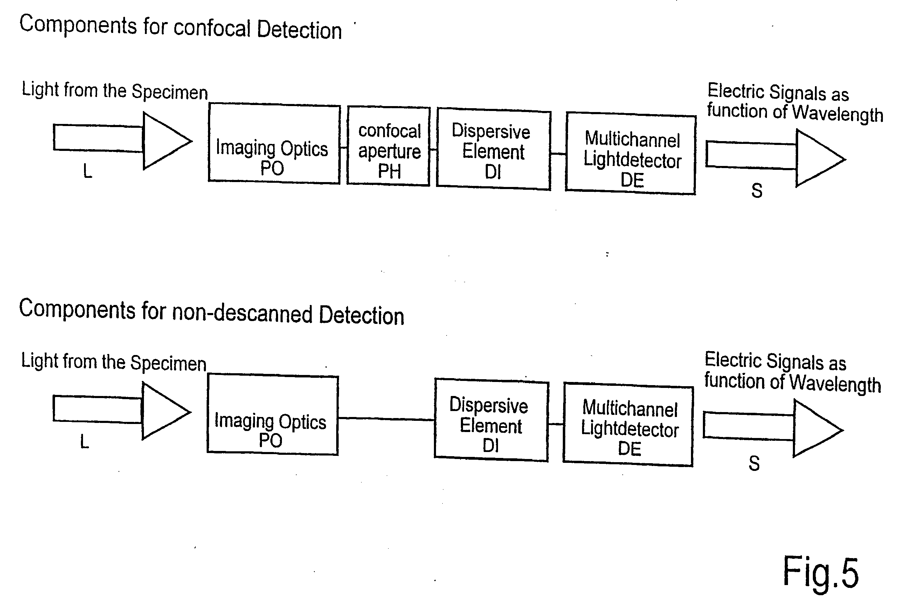

Hintergrund des erfindungsgemäßen Verfahrens ist eine spektral aufgespaltete Detektion der Fluoreszenz. Dazu wird das Emissionslicht im Scanmodul oder im Mikroskop (bei Mehrphotonen-Absorption) mit Hilfe eines Elementes zur Trennung der Anregungsstrahlung von der detektierten Strahlung wie dem Hauptfarbteiler (MDB) oder einem AOTF gemäß 7346DE oder gemäß 7323DE vom Anregungslicht abgespalten. Bei Durchlichtanordnungen kann ein derartiges Element auch völlig entfallen. Ein Blockschaltbild der nun folgenden Detektoreinheit ist in Abb. 5 dargestellt. Das Licht L der Probe wird nun mit Hilfe von einer abbildenden Optik PO bei konfokaler Detektion durch eine Blende (Pinhole) PH fokussiert, wodurch Fluoreszenz, die außerhalb des Fokus entstand, unterdrückt wird. Bei einer nichtdescannten Detektion entfällt die Blende. Das Licht wird nun mit Hilfe eines winkeldispersiven Elements DI in seine Spektralanteile zerlegt. Als winkeldispersive Elemente kommen Prismen, Gitter und beispielsweise akusto optische Elemente in Frage. Das vom dispersiven Element in seine spektralen Komponenten aufgespaltete Licht wird im Anschluß auf einen Zeilendetektor DE abgebildet. Dieser Zeilendetektor DE mißt also das Emissionssignal S in Abhängigkeit von der Wellenlänge und wandelt dies in elektrische Signale um. Zusätzlich kann der Detektionseinheit noch ein Linienfilter zur Unterdrückung der Anregungswellenlängen vorgeschaltet werden.

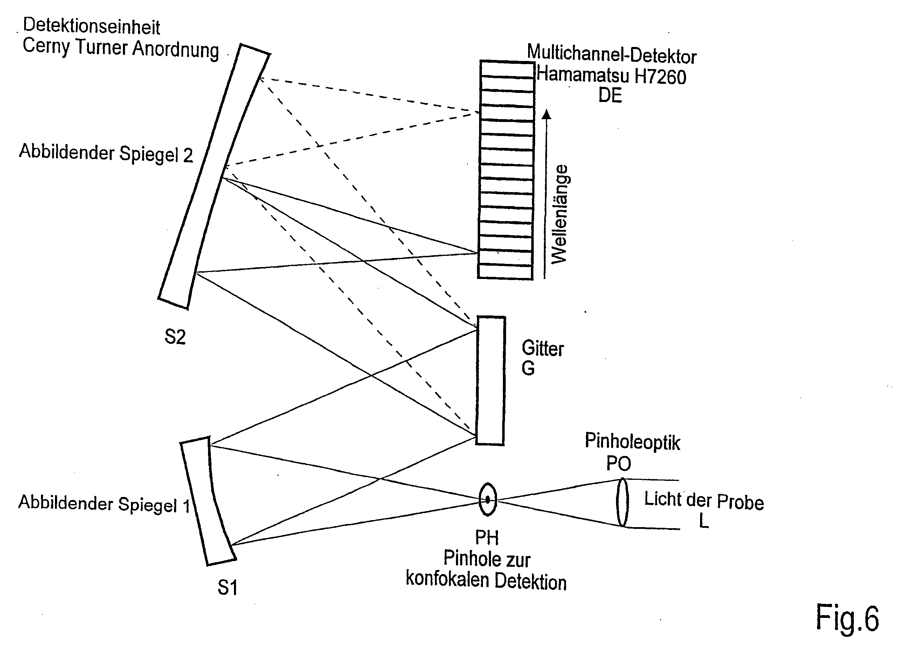

Eine mögliche Ausführungsform des optischen Strahlenganges der in Abb. 5 im Blockschaltbild gezeigten Detektoreinheit ist in Abb. 6 dargestellt. Der Aufbau beschreibt im wesentlichen einen Cemy Turner Aufbau. Bei einer konfokalen Detektion wird das Licht L der Probe mit der Pinholeoptik PO durch die konfokale Blende PH fokusiert. Bei einer nichtdescannten Detektion im Falle einer Mehrphotonen-Absorption kann diese Blende entfallen. Der erste abbildende Spiegel S1 kollimiert das Fluoreszenzlicht. Anschließend trifft das Licht auf ein Liniengitter G, beispielsweise ein Gitter mit einer Linienzahl von 651 Linien pro mm Das Gitter beugt das Licht entsprechend seiner Wellenlänge in verschiedene Richtungen. Der zweite abbildende Spiegel S2 fokussiert die einzelnen spektral aufgespaltenen Wellenlängenanteile auf die entsprechenden Kanäle des Zeilendetektors DE Besonders vorteilhaft ist der Einsatz eines Zeilen-Sekundärelektronenvervielfachers der Firma Hamamatsu H7260. Der Detektor besitzt dann 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine optische Auflösung von etwa 10 nm ergibt. Somit ist diese Anordnung nur bedingt zur Spektroskopie geeignet. Jedoch ist ihr Einsatz in einem bildgebenden System vorteilhaft, da das Signal pro Detektionskanal aufgrund des relativ breiten detektierten Spektralbandes noch relativ groß ist. Eine Verschiebung des freien Spektralbereiches kann zusätzlich durch eine Verdrehung beispielsweise des Gitters erfolgen.

Eine weitere mögliche Ausführungsform könnte die Verwendung eines Matrixdetektors (z.B. eine CCD,Hersteller Sony, Kodak...) beinhalten. Hierbei wird in einer Koordinate durch das dispersive Element eine Aufspaltung in verschiedene Wellenlängenanteile vorgenommen. In der verbleibenden Richtung auf dem Matrixdetektor wird eine komplette Zeile (oder Spalte) des gescannten Bildes abgebildet. Diese Ausführungsform ist besonders vorteilhaft beim Aufbau eines Linienscanners (Lit.: Corle, Kino; "Confocal Scanning Optical Microscopy and Related Imaging Systems"; Academic Press 1996). Der prinzipielle Aufbau entspricht im wesentlichen dem eines LSM nach Abb. 2. Jedoch wird statt eines Punktfokus eine Linie in den Fokus abgebildet und die zu untersuchende Probe nur noch in einer Richtung gescannt. Die Linie wird durch das Einschalten einer Zylinderlinse ZL (in Abb.2 gestrichelt dargestellt) vordem Scanner erzeugt. Als konfokale Blende dient in einem solchen Aufbau statt einer Lochblende eine Schlitzblende. Eine nichtdescannte Detektion insbesondere bei Verwendung einer Mehrphotonen-Absorption kann auch mit dieser Anordnung wie in Fig.2 dargestellt, erfolgen. Weiterhin kann die Schlitzblende bei Mehrphotonenabsorption entfallen.

In den oben beschriebenen Ausführungsform(en) detektiert jeder Einzelkanal ein Spektralband des Emissionsspektrums mit einer spektralen Breite von ca. 10 nm. Die Emission der für die Fluoreszenzmikroskopie relevanten Farbstoffe erstreckt sich jedoch über einen Wellenlängenbereich von mehreren 100 nm. Deshalb erfolgt in der erfindungsgemäßen Anordnung eine Summation der Einzelkanäle entsprechend der Fluoreszenzbänder der verwendeten Farbstoffe. Hierzu wird im ersten Schritt ein so genannter Spektralscan durchgeführt, der die Informationen der Einzelkanäle z.B. als Bildinformation ausliest. Hierbei wird die Probe vorteilhaft mit mehreren Anregungswellenlängen entsprechend der verwendeten Farbstoffe bestrahlt. Für jeden Bildpunkt wird also die Summe der Spektralkomponenten der einzelnen Farbstoffe, die sich an dem gerade gemessenen Bildpunkt befinden, aufgezeichnet.
Im Anschluß kann der Nutzer beliebig die einzelnen Kanäle zu Detektionsbändem (Emissionsbändem) zusammenfassen also aufsummieren. Die Auswahl der Summationsbreiche kann beispielsweise durch die Darstellung der Signale je Bildpunkt in den Einzelkanälen in einem Histogramm erfolgen. Das Histogramm repräsentiert die Summe aller Emissionsspektren der in der Probe verwendeten Farbstoffe. Diese Summation erfolgt vorteilhaft entsprechend den Emissionsspektren der angeregten Farbstoffe, wobei die jeweiligen Anregungswellenlängen ausgeblendet und Signale verschiedener Farbstoffe in verschiedenen Detektionsbändem summiert werden.

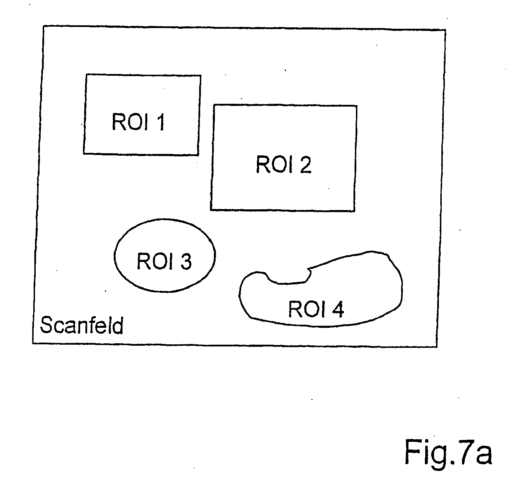

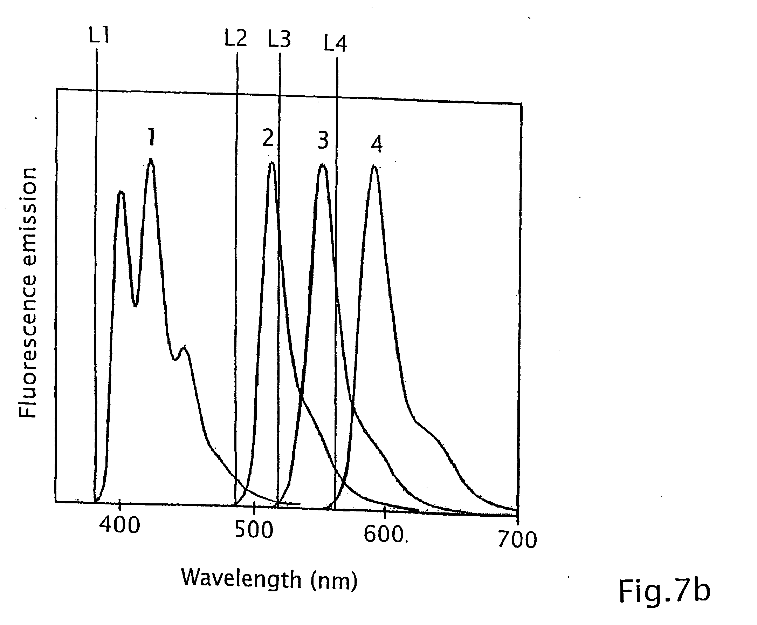

Mit der Anordnung ist ein schneller Wechsel der Detektionsbänder für Multitracking - Anwendungen, d.h. für einen Wechsel der Bestrahlungswellenlänge und/ oder Intensität während des Scanvorganges, wie in DE19829981A1 beschrieben, möglich. Der Wechsel kann pixelgenau erfolgen, d.h. in einem Zeitraum von einigen µs. Dadurch ist beispielsweise auch die Betrachtung von bestimmten Regionen der zu untersuchenden Probe mit unterschiedlichen Detektionsbändem (ROI-Tracking) möglich. Abb. 7a zeigt schematisch eine Verteilung von verschiedenen Regionen besonderen Interesses (ROI 1-4) in einem LSM-Bild, die beispielsweise verschieden angefärbte Regionen einer Zelle repräsentieren. In Abb. 7b sind typische zugehörige Emissionsspektren 1-4 mit ihren Anregungswellenlängen (L1-L4) dargestellt. Aufgrund der starken spektralen Überlagerung der Emissionsspektren der Einzelfarbstoffe bietet sich zur Detektion der Einzelfarbstoffe das Multitracking Verfahren CZ7302 an, da sich die Absorptionseigenschaften der Einzelfarbstoffe stark unterscheiden. Bei diesem Verfahren nach dem Stand der Technik werden die einzelnen Farbstoffe selektiv angeregt und bisher nacheinander in diesem Falle 4 komplette Bilder gescannt. Eine Umkonfiguration der Detektionseinheiten nach dem Stand der Technik zwischen den einzelnen ROIs erfordert die Bewegung von mechanischen Detektionskomponenten und ist daher nicht mit einer Geschwindigkeit von einigen Mikrosekunden möglich, wie es für schnelle Vergleiche mehrerer dynamisch Prozesse in verschiedenen Regionen, z.B. bei stark bleichenden oder sich bewegenden Proben und schnell ablaufenden Prozessen wünschenswert ist. Mit Hilfe der erfindungsgemäßen Vorrichtung ist jedoch eine schnelle Umgruppierung der Summationsbänder zwischen den einzelen ROIs durch den Nutzer oder Computer möglich. Die Probe muß nur noch einmal zur Aufnahme sich stark überlappender ROIs gescannt werden. Dies ist besonders vorteilhaft bei stark bleichenden Präparaten. Weiterhin können schnell ablaufende Veränderungen / Kontraste zwischen einzelnen Regionen (ROIs) sichtbar gemacht werden. Dies ist beispielweise dann sinnvoll, wenn z.B. das Diffussionsverhalten in biologischen Umgebungen untersucht werden soll. Hierzu werden an bestimmten Stellen der Probe Farbstoffe gebleicht und im Anschluß der Zufluß von neuem Farbstoff untersucht. In einem weiteren Verfahren werden so genannte Caged Compounds verwendet. Durch ein gezieltes Anregen dieser Farbstoffe können beispielsweise Kalziumionen in Neuronen freigesetzt werden. Diese Ionenkonzentrationsänderungen können im Anschluß mit Änderungen in anderen Regionen der Probe korreliert werden.
Die Einstellung der ROIs durch den Nutzer kann beispielsweise wie folgt geschehen: Nach der Aufnahme eines Spektralscans unter Verwendung aller oder der meisten zum Anregen der Farbstoffe in den einzelnen ROI-s notwendigen Anregungslinien können Summenkanäle zwischen den einzelnen Anregungslaserlinien gebildet werden (L1 bis L2, L2 bis L3, L3 bis L4 und L4 gemäß Fig.7b bis zur maximalen Emissionswellenlänge). Diese Summenkanäle entsprechen Teilen der Fluoreszenzbänder der einzelnen Farbstoffe. Weiterhin erfolgt eine gleichzeitige Summation der Signale verschiedener Farbstoffe in gleichen Summenkanälen aufgrund der starken Überlagerung. Diese Summenkanäle werden im Anschluß farbkodiert in verschiedenen Bildkanälen abgelegt und miteinander überlagert dargestellt. Aufgrund der verschiedenen lokalen Farbmischungen in den Bildkanälen können die verschiedenen ROIs durch den Nutzer oder durch automatische Mustererkennung lokalisiert und spezielle Summationseinstellungen beispielsweise gemäß der am stärksten auftretenden Farbe für die einzelnen ROIs definiert werden..
In einem 2. Verfahren zur Einstellung der verschiedenen ROIs erfolgt eine Vermessung des Fluoreszenzschwerpunktes. Hierzu werden im Detektor alle Einzelkanäle, die mit Anregungslaserlinien bestrahlt werden abgeschalten. Jede ROI besitzt aufgrund der veränderten Emissionseigenschaften der jeweils verwendeten Farbstoffe einen charakteristischen Fluoreszenzschwerpunkt. Somit können die verschiedenen ROIs durch die Lage des charakteristischen Farbschwerpunktes unterschieden und getrennt sichtbar gemacht werden.
Im Anschluß erfolgt wiederum eine spezifisch den Farbstoffeigenschaften angepaßte Einstellung der Summenkanäle für die einzelen ROIs.

Zusätzlich sind beliebige Einzelkanäle auch durch den Nutzer abschaltbar. Dies ist besonders zur Unterdrückung einer oder mehrerer Anregungslaserlinien sinnvoll.
Bei der Bestimmung von Ionenkonzentrationen nach Abb. 4 werden die Summensignale durcheinander geteilt und man erhält dadurch ein Maß für die Höhe der Ionenkonzentration.
Bei der Verwendung des Verfahren in der Fluoreszenzkorrelationsspektroskopie kann eine Autokorrelation eines Summenkanals und /oder eine Kreuzkorrelation zwischen mehrenen Summenkanälen erfolgen.

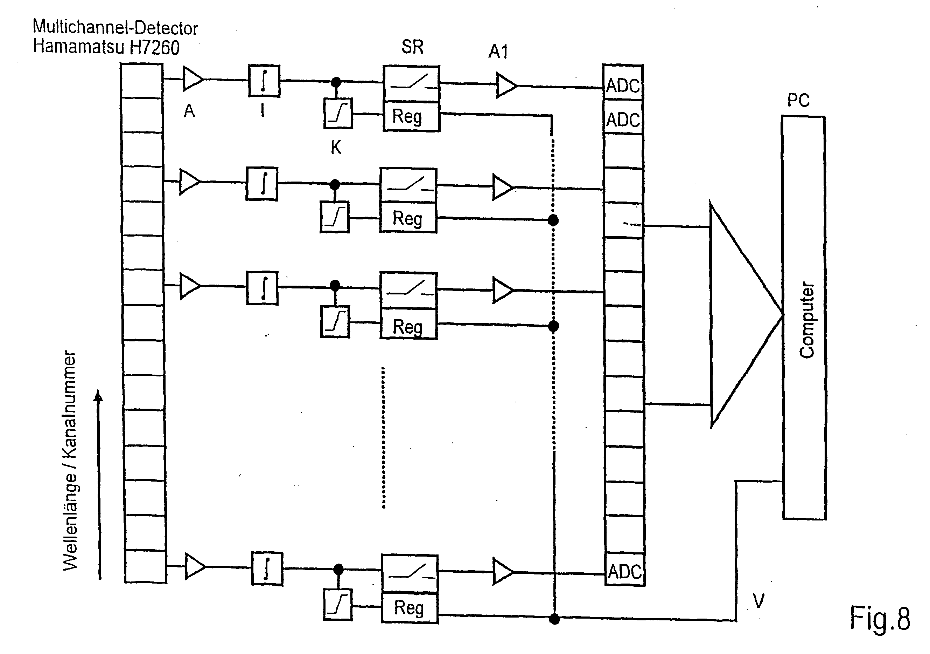

Die Berechnung der Emissionsbänder kann digital oder auch analog erfolgen. Beide Anordnungen werden im folgenden näher beschrieben. Eine Anordnung zur digitalen Berechnung des Summensignals ist in Abb. 8 schematisch dargestellt. Hierbei wird der an den Anoden eines Mehrkanal-PMT fließende Strom, jeweils durch den ersten Amplifier A (als StromSpannungswandler geschaltet) in eine Spannung gewandelt und verstärkt. Die Spannung wird einem Integrator I zugeführt der über eine entsprechende Zeit (z.B. Pixelverweilzeit) das Signal integriert.
Zur schnelleren Auswertung kann dem Integrator I ein Komparator K nachgeschaltet werden, der als einfacher Komparator eine Schaltschwelle hat, die bei Überschreitung ein digitales Ausgangssignal erzeugt oder der als Fensterkomparator ausgebildet ist und dann ein digitales Ausgangssignal bildet, wenn sich das Eingangssignal zwischen der oberen und unteren Schaltschwelle befindet oder wenn das Eingangssignal außerhalb (unter oder über) den Schaltschwellen liegt. Die Anordnung des Komparators bzw. des Fensterkomparators kann sowohl vor dem Integrator als auch danach erfolgen. Schaltungsanordnungen ohne Integrator (so genannte Verstärkermode) sind ebenfalls denkbar. Bei der Anordnung im Verstärkermode ist weiterhin der Komparator K auch nach entsprechender Pegelanpassung vorhanden. Der Ausgang des Komparators K dient als Steuersignal für ein Switch-Register SR, das direkt die aktiven Kanäle schaltet (online) oder der Zustand wird dem Computer über eine zusätzliche Verbindung V mitgeteilt, um eine individuelle Auswahl der aktiven Kanäle zu treffen (off-line). Das Ausgangssignal des switch-Registers SR wird direkt einem weiteren Verstärker A1 zur Pegelanpassung, für die nachfolgende A/D-Wandlung AD zugeführt. Die AD gewandelten Werte werden über geeignete Datenübertragung an einen Rechner (PC oder Digital-SignalProzessor DSP) übertragen, der die Berechnung des /der Summensignale(s) durchführt.

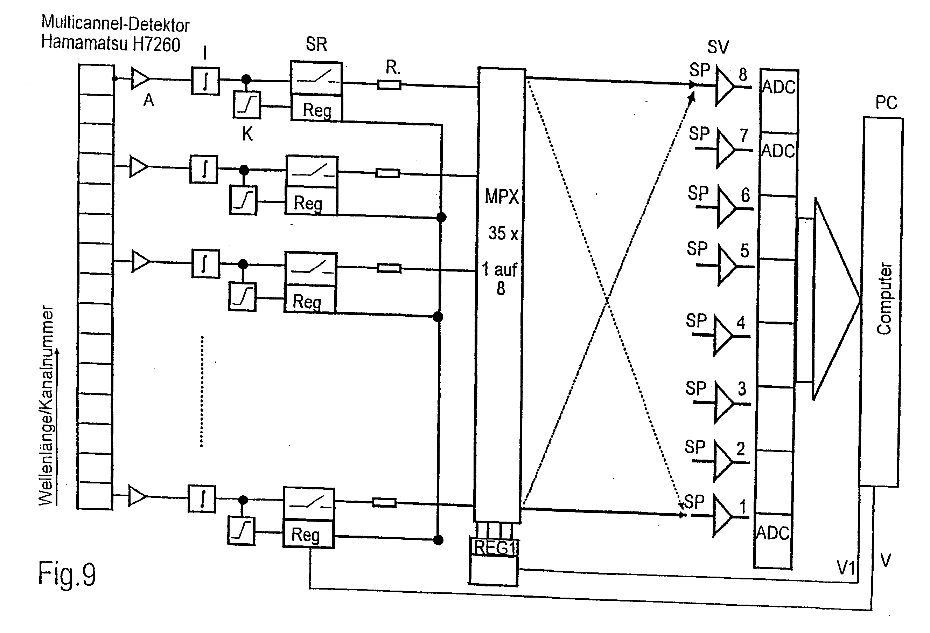

Ein auf analoger Datenverarbeitung basierendes Aquivalent der Anordnung in Abb. 8 ist in Abb. 9 dargestellt. Die Signale der Einzelkanäle werden hierbei wiederum mit einem Verstärker A in Spannungssignale transformiert.

Anschließend werden die einzelnen Spannungssignale in einem Integrator I während der Pixelverweilzeit aufintegriert. Dem Integrator nachgeschaltet ist ein Komparator K der einen Vergleich des aufintegrierten Signals mit einem Referenzsignal durchführt.
Falls das aufintegrierte Signal kleiner als die Komparatorschwelle ist, so würde in dem entsprechenden Einzelkanal kein oder ein zu kleines Fluoreszenzsignal gemessen. In einem solchen Falle soll das Signal des Einzelkanals nicht weiter verarbeitet werden, da dieser Kanal nur einen Rauschanteil zum Gesamtsignal beiträgt. Der Komparator betätigt in einem solchen Falle über SR einen Schalter und der Einzelkanal wird für den gerade gemessenen Pixel ausgeschalten. Mit Hilfe der Komparatoren in Kombination mit den Schaltern wird also automatisch der für den gerade gemessenen Bildpunkt relevante Spektralbereich ausgewählt.

Im Anschluß kann das integrierte Spannungssignal der Einzelkanäle mit einem mit dem Switch-Register SR verbundenen Demultiplexer MPX auf verschiedene Summenpunkte durch das Register Reg1 geschaltet werden. In Abb. 9 sind 8 verschiedene Summenpunkte SP eingezeichnet. Die Steuerung des Registers Reg1 erfolgt durch eine Steuerleitung V1 vom Rechner. Jeweils ein Summenpunkt SP bildet jeweils einen Teil des Summationsverstärkers SV, der die Summation der angewählten Einzelkanäle durchführt. Insgesamt sind in Abb. 8 8 Summenverstärker SV dargestellt. Die Summensignale werden im Anschluß mit jeweils einem Analog-Digital-Wandler in digitale Signale umgewandelt und vom Computer oder DSP weiterverarbeitet. Die Summenverstärker SV können auch mit einer veränderlichen nichtlinearen Kennlinie betrieben. In einer weiteren Anordnung (digitale (nach Abb. 8) und analoge Detektion. (nach Abb. 9)) erfolgt eine Manipulation bzw. Verzerrung der Eingangssignale der Einzeldetektionskanäle durch: eine Veränderung der Verstärkung von (A), eine Veränderung der Integrationszeiten von (I), durch ein Einspeisen eines zusätzlichen Offsets vor dem Integrator und/oder durch eine digitale Beeinflußung der gezählten Photonen bei einer Photonenzählanordnung. Beide Methoden können auch beliebig miteinander kombiniert werden.

Für die Vermeidung von Artefakten ist es bei einer Fluoreszenzmessung notwendig das von der Probe rückgestreute Anregungslicht zu unterdrücken oder zumindest so stark abzuschwächen, dass es kleiner als oder in der gleichen Größenordnung wie das Emissionsmaximum ist. Hierzu kann der oben beschriebene zusätzliche Linienfilter oder ein entsprechend optimierter Hauptfarbteiler (MDB) zur optischen Abschwächung verwendet werden. Da die spektrale Breite der Anregungslaserstrahlung sehr viel kleiner als die vom Einzelkanal detektierte Bandbreite ist, kann die rückgestreute bzw. reflektierte Anregungsstrahlung auch durch ein gezieltes Ausschalten des entsprechenden Einzelkanals mit dem in Abb. 9 dargestellten MPX erfolgen. Tifft die Anregungswellenlänge auf zwei Detektionskanäle so kann durch eine Verdrehung des Gitters, eine Verschiebung des Zeilendetektor oder eine Verkippung von S1 oder S2 in Abb. 6 die Anregungslinie so verschoben werden, dass sie nur auf einen Detektionskanal fällt.

Die Anordnung nach Abb. 9 hat gegenüber Anordnung nach Abb. 8 mehrere Vorteile. Der aufälligste Vorteil ist, dass lediglich die Summenkanäle (also die Detektionsbänder der verwendeten Farbstoffe) in digitale Daten gewandelt und an den Computer gesendet werden müssen. Dadurch werden die vom Computer zu verarbeitenden Datenraten minimiert. Dies ist besonders wichtig bei der Anwendung des Verfahrens in der Echtzeitmikroskopie bei der beispielsweise mehr als 50 Bilder mit 512x512 Pixeln und 12 bit Pixeltiefe detektiert werden müssen, um die extrem schnell ablaufenden dynamischen Prozesse registrieren zu können. Beim Einsatz dieses Verfahrens sind weiterhin keine Grenzen an die Anzahl der Einzelkanäle des verwendeten Zeilendetektor (Matrixdetektors) und damit an die Größe des detektierbaren Spektralbereiches und/oder die spektrale Auflösung des Spektralsensors gesetzt.
Weiterhin sind bei der in Abb. 8 dargestellten Vorrichtung die zu wandelnden Signalpegel wesentlich kleiner. Dadurch ist das zu erwartende Signal zu Rauschverhältnis geringer.
In den beide oben beschriebenen Anordnungen wurde vorzugsweise eine Integratorschaltung zur Detektion der Einzelkanalsignale verwendet. Uneingeschränkt kann jedoch auch eine Photonenzählung in den Einzelkanälen erfolgen und die Photonenzahlen addiert werden. Die in Abb. 8 dargestellte Anordnung hat jedoch den Vorteil, dass sie neben dem Summensignalen auch noch die komplette Spektralinformation zur nachträglichen Bildverarbeitung zur Verfügung stellt. Die Erfindung schließt deshalb auch eine Kombination beider Anordnungen ein.

## Patentansprüche

1. Verfahren zum Betrieb eines Laserscanmikroskopes mit bildpunktweiser Beleuchtung zur Erfassung von charakteristischen Größen des wellenlängenabhängigen Verhaltens einer beleuchteten Probe, insbesondere des Emissions- - und/oder Absorptionsverhaltens, vorzugsweise der Fluoreszenz und/oder Lumineszenz und/oder Phosphoreszenz und/oder enzymaktivierten Lichtemission und/oder enzymaktivierten Fluoreszenz, mit detektionsseitig wellenlängenabhängiger Zerlegung der Bildpunktinformation der Probe in Spektralkomponenten mit einem dispersiven Element und ortsaufgelöster Detektion der Spektralkomponenten mittels eines Zeilendetektors mit einzelnen Detektorelementen zur Detektion in Einzelkanälen und Umwandlung in elektrische Signale, wobei mindestens eine digitale oder analoge Summierung der Signale mehrerer Einzelkanäle erfolgt und mindestens ein Summensignal gebildet wird, wobei in einem Scanvorgang verschiedene Probenbereiche gescannt werden und diese mit unterschiedlicher Bestrahlungswellenlänge und/oder Bestrahlungsintensität beaufschlagt werden und während des Scanvorganges für unterschiedliche Probenbereiche ein Wechsel von Detektionsbändem, die aus Einzelkanälen bestehen, durch Variation der Zusammensetzung der Summensignale erfolgt, wobei die Summensignale zur Generierung eines Bildes verwendet werden und nach nur einem Scanvorgang ein farbkodiertes Fluoreszenzbild von den Probenbereichen erzeugt wird.

2. Verfahren nach einem der vorangehenden Anspruche, mit einer bildlichen Darstellung der summierten Bereiche.

3. Verfahren nach einem der vorangehenden Ansprüche, wobei mehrere Teilsummen gebildet und dann addiert werden.

4. Verfahren nach einem der vorangehenden Ansprüche, mit einer Überlagerung von Teilsummen von Spektralkomponenten, die überlagerte Signale verschiedener Fluoreszenzkomponenten enthalten.

5. Verfahren nach einem der vorangehenden Ansprüche, **gekennzeichnet durch** die Kombination mit spektraler Schwerpunktbildung für mehrere Spektralkomponenten.

6. Verfahren nach einem der vorangehenden Ansprüche, mit mathematischer Verknüpfung wie Quotienten- oder Differenzbildung von Teilsummen oder Einzelkomponenten und bildlicher Darstellung der Verknüpfung.

7. Verfahren nach einem der vorangehenden Ansprüche, wobei die Bestimmung des Summensignals der spektral aufgespalteten Emissionsstrahlung zur: Unterscheidung von verschiedenen Farbstoffen und/oder zur Bestimmung der lokalen FarbstoffZusammensetzung eines Bildpunktes bei Verwendung von mehreren Farbstoffen simultan und/oder zur Bestimmung der lokalen Verschiebung des Emissionsspektrums in Abhängigkeit von der lokalen Umgebung an den der/die Farbstoffe gebunden sind und/oder zur Vermessung von Emissionsratiofarbstoffen zur Bestimmung von lonenkonzentrationen erfolgt.

8. Verfahren nach einem der vorangehenden Ansprüche, wobei die Bestimmung des Summensignals der spektral aufgeweiteten reflektierten, rückgestreuten und/oder transmittierten Anregungsstrahlung von Fluorochromen zur: Unterscheidung von verschiedenen Farbstoffen und/ oder zur Bestimmung der lokalen FarbstoffZusammensetzung eines Bildpunktes bei Verwendung von mehreren Farbstoffen simultan und/oder zur Bestimmung der lokalen Verschiebung des Absorptionsspektrums in Abhängigkeit von der lokalen Umgebung an den der/die Farbstoffe gebunden sind und/oder zur Vermessung der Absorptionsratio zur Bestimmung von lonenkonzentrationen erfolgt.

9. Verfahren nach mindestens einem der vorangehenden Ansprüche, wobei die Zusammensetzung der Summensignale während des Scannens in Abhängigkeit von den Anregungsparametern variiert wird.

10. Verfahren nach mindestens einem der vorangehenden Ansprüche, wobei die Zusammensetzung der Summensignale während des Scannens in Abhängigkeit von der jeweiligen Scanposition variiert wird.

11. Verfahren nach mindestens einem der vorangehenden Ansprüche, wobei die Signale von Detektionskanälen gewandelt und digital ausgelesen werden und die Summation digital in einem Rechner erfolgt.

12. Verfahren nach mindestens einem der vorangehenden Ansprüche, wobei die Summation mit analoger Datenverarbeitung mittels eines Demultiplexers in Kombination mit einem Summationsverstärkers erfolgt.

13. Verfahren nach mindestens einem der vorangehenden Ansprüche, wobei die Signale der Detektorkanäle durch eine nichtlineare Verzerrung der Eingangssignale beeinflusst werden.

14. Verfahren nach mindestens einem der vorangehenden Ansprüche, wobei eine Beeinflussung der Intergrationsparameter erfolgt.

15. Verfahren nach mindestens einem der vorangehenden Ansprüche, wobei eine Beeinflussung der Kennlinie eines Verstärkers erfolgt.

16. Verfahren nach mindestens einem der vorangehenden Anspruche, wobei eine Überlagerung mit weiteren Bildern erfolgt.

17. Verfahren nach mindestens einem der vorangehenden Ansprüche, wobei die Summensignale mit einer lookup-Tabelle kombiniert werden und mittels der lookup-Tabelle eine Darstellung verschiedener Farbstoffe und/oder der Spreizung des generierten Bildes erfolgt.

18. Verfahren nach mindestens einem der vorangehenden Ansprüche, wobei über Komparatoren in Detektionskanälen ein Vergleich des gemessenen Signals mit einem Referenzsignal erfolgt und im Falle einer Unterschreitung und/oder Überschreitung des Referenzsignals eine Veränderung der Betriebsweise des Detektionskanales erfolgt.

19. Verfahren nach Anspruch 18, wobei eine Abschaltung und/oder Nichtberücksichtigung des jeweiligen Detektionskanals erfolgt.

## Claims

1. Method of operating a laser scanning microscope with pixel-wise illumination to detect characteristic variables of the wavelength-dependent behaviour of an illuminated specimen, in particular the emission and/or absorption behaviour, preferably the fluorescence and/or luminescence and/or phosphorescence and/or enzyme-activated light emission and/or enzyme-activated fluorescence, with detection-side wavelength-dependent fragmentation of the pixel information of the specimen into spectral components with a dispersive element and locally resolved detection of the spectral components by means of a line detector with individual detector elements for detection in individual channels and conversion into electrical signals,
wherein at least one digital or analogue summation of the signals of several individual channels is performed and at least one sum signal is formed, wherein various specimen regions are scanned in a scanning operation and these are subjected to a different irradiation wavelength and/or irradiation intensity and for different specimen regions, a change in detection bands, which consist of individual channels, is carried out during the scanning operation by variation of the composition of the sum signals, wherein the sum signals are used for generating an image and a colour-coded fluorescence image of the specimen regions is generated after only one scanning operation.

2. Method as claimed in the preceding claim, with a pictorial representation of the summed regions.

3. Method as claimed in either one of the preceding claims, wherein several partial sums are formed and then added.

4. Method as claimed in any one of the preceding claims, with an overlap of partial sums of spectral components which contain overlapped signals of various fluorescence components.

5. Method as claimed in any one of the preceding claims, **characterised by** the combination with spectral centroid formation for several spectral components.

6. Method as claimed in any one of the preceding claims, with a mathematical function such as quotient formation or subtraction of partial sums or individual components and a pictorial representation of the function.

7. Method as claimed in any one of the preceding claims, wherein the determination of the sum signal of the spectrally split emission radiation is performed for the purpose of:
differentiating between various dyes and/or
determining the local dye composition of a pixel when using several dyes simultaneously and/or
determining the local displacement of the emission spectrum in dependence upon the local environment to which the dye(s) are bonded, and/or
for measuring emission ratio dyes for determining ion concentrations.

8. Method as claimed in any one of the preceding claims, wherein the determination of the sum signal of the spectrally widened, reflected, backscattered and/or transmitted excitation radiation of fluorochromes is performed for the purpose of:
differentiating between various dyes and/or determining the local dye composition of a pixel when using several dyes simultaneously and/or determining the local displacement of the absorption spectrum in dependence upon the local environment to which the dye(s) are bonded, and/or for measuring the absorption ratio for determining ion concentrations.

9. Method as claimed in at least one of the preceding claims, wherein during scanning the composition of the sum signals is varied in dependence upon the excitation parameters.

10. Method as claimed in at least one of the preceding claims, wherein during scanning the composition of the sum signals is varied in dependence upon the respective scanning position.

11. Method as claimed in at least one of the preceding claims, wherein the signals of detection channels are converted and read out digitally and the summation is performed digitally in a computer.

12. Method as claimed in at least one of the preceding claims, wherein the summation is performed with analogue data processing by means of a demultiplexer in combination with a summation amplifier.

13. Method as claimed in at least one of the preceding claims, wherein the signals of the detector channels are influenced by a non-linear distortion of the input signals.

14. Method as claimed in at least one of the preceding claims, wherein the integration parameters are influenced.

15. Method as claimed in at least one of the preceding claims, wherein the characteristic curve of an amplifier is influenced.

16. Method as claimed in at least one of the preceding claims, wherein an overlap with further images is implemented.

17. Method as claimed in at least one of the preceding claims, wherein the sum signals are combined with a look-up table the look-up table provides a representation of various dyes and/or the spreading of the generated image.

18. Method as claimed in at least one of the preceding claims, wherein a comparison of the measured signal with a reference signal is performed by comparators in detection channels and in the event that the measured signal is less than and/or greater than the reference signal a change in the operating mode of the detection channel is implemented.

19. Method as claimed in claim 18, wherein the respective detection channel is switched off and/or not taken into consideration.

## Revendications

1. Procédé de fonctionnement d'un microscope à balayage laser avec éclairage point par point pour l'enregistrement de grandeurs caractéristiques du comportement lié à la longueur d'onde d'un échantillon éclairé, en particulier du comportement à l'émission et/ou comportement à l'absorption, de préférence la fluorescence et/ou la luminescence et/ou la phosphorescence et/ou l'émission lumineuse activée par enzyme et/ou la fluorescence activée par enzyme, avec décomposition, dépendante de la longueur d'onde côté détection, de l'information de point d'image de l'échantillon en composants spectraux avec un élément dispersif et une détection à résolution locale des composants spectraux au moyen d'un détecteur de lignes avec des éléments détecteurs individuels pour la détection dans des canaux individuels et la conversion en des signaux électriques, au moins un cumul numérique ou analogique des signaux de plusieurs canaux individuels étant effectué et au moins un signal cumulé étant formé, différentes zones d'échantillon étant scannées dans un processus de balayage et celles-ci étant sollicitées avec une longueur d'onde d'irradiation différente et/ou une intensité d'irradiation différente et un changement de bandes de détection, qui se composent de canaux individuels, s'effectuant pendant le processus de balayage par variation de la composition des signaux cumulés pour différentes zones d'échantillon, les signaux cumulés étant utilisés pour générer une image et, après seulement un processus de balayage, une image de fluorescence à codage couleur étant générée pat les zones d'échantillon.

2. Procédé selon la revendication précédente, comprenant une représentation en image des zones cumulées.

3. Procédé selon l'une quelconque des revendications précédentes,
plusieurs sommes partielles étant formées et alors ajoutées.

4. Procédé selon l'une quelconque des revendications précédentes,
comprenant une superposition de sommes partielles de composants spectraux, qui contiennent des signaux superposés de différents composants de fluorescence.

5. Procédé selon l'une quelconque des revendications précédentes,
**caractérisé par** la combinaison avec une formation de point principal spectral pour plusieurs composants spectraux.

6. Procédé selon l'une quelconque des revendications précédentes,
avec une association mathématique comme la formation de quotient ou de différence de sommes partielles ou de composants individuels et représentation en image de l'association.

7. Procédé selon l'une quelconque des revendications précédentes,
la détermination du signal cumulé du rayonnement d'émission divisé au plan spectral étant effectuée pour : la différentiation de différents colorants et/ou pour la détermination de la composition locale du colorant d'un point d'image avec l'utilisation de plusieurs colorants simultanément et/ou pour la détermination du décalage local du spectre d'émission en fonction de l'environnement local auquel le ou les colorants est ou sont liés et/ou pour le mesurage de colorants de ratio d'émission pour déterminer des concentrations d'ions.

8. Procédé selon l'une quelconque des revendications précédentes,
la détermination du signal cumulé du rayonnement d'excitation élargi au plan spectral et réfléchi, rétrodiffusé et/ou transmis, de fluorochromes s'effectuant pour : la différentiation de différents colorants et/ou pour la détermination de la composition locale du colorant d'un point d'image avec l'utilisation de plusieurs colorants simultanément et/ou pour la détermination du décalage local du spectre d'absorption en fonction de l'environnement local auquel le ou les colorants est ou sont liés et/ou pour le mesurage du ratio d'absorption pour la détermination de concentrations d'ions.

9. Procédé selon au moins l'une quelconque des revendications précédentes,
la composition des signaux cumulés étant modifiée pendant le balayage en fonction des paramètres d'excitation.

10. Procédé selon au moins l'une quelconque des revendications précédentes,
la composition des signaux cumulés étant modifiée pendant le balayage en fonction de la position de balayage respective.

11. Procédé selon au moins l'une quelconque des revendications précédentes,
les signaux de canaux de détection étant convertis et lus de façon numérique et le cumul s'effectuant de façon numérique dans un ordinateur.

12. Procédé selon au moins l'une quelconque des revendications précédentes,
le cumul s'effectuant avec un traitement analogique de données au moyen d'un démultiplexeur en combinaison avec un amplificateur de totalisation.

13. Procédé selon au moins l'une quelconque des revendications précédentes,
les signaux des canaux de détection étant influencés par une distorsion non linéaire des signaux d'entrée.

14. Procédé selon au moins l'une quelconque des revendications précédentes,
une influence des paramètres d'intégration étant effectuée.

15. Procédé selon au moins l'une quelconque des revendications précédentes,
une influence de la courbe caractéristique d'un amplificateur étant effectuée.

16. Procédé selon au moins l'une quelconque des revendications précédentes,
une superposition s'effectuant avec d'autres images.

17. Procédé selon au moins l'une quelconque des revendications précédentes,
les signaux cumulés étant combinés avec un tableau à consulter et une représentation de différents colorants et/ou de l'étalement de l'image générée s'effectuant au moyen du tableau à consulter.

18. Procédé selon au moins l'une quelconque des revendications précédents,
une comparaison du signal mesuré avec un signal de référence s'effectuant par des comparateurs dans des canaux de détection et une variation du mode de fonctionnement du canal de détection s'effectuant lors d'un sous-dépassement et/ou d'un dépassement du signal de référence.

19. Procédé selon la revendication 18,
une déconnexion et/ou une non-prise en compte du canal de détection concerné étant effectuées.
